(19) Europäisches Patentamt
European Patent Office
Office européen des brevets

(11) **EP 4 183 577 A1**

(12) **EUROPEAN PATENT APPLICATION**
published in accordance with Art. 153(4) EPC

(43) Date of publication:
**24.05.2023 Bulletin 2023/21**

(21) Application number: **21842061.0**

(22) Date of filing: **13.07.2021**

(51) International Patent Classification (IPC):
**B32B 27/10** (2006.01)     **B32B 27/28** (2006.01)
**C08F 8/44** (2006.01)      **C08J 3/03** (2006.01)
**C08L 23/08** (2006.01)     **C08L 33/00** (2006.01)
**C09D 123/08** (2006.01)    **C09D 133/00** (2006.01)
**C09D 7/61** (2018.01)

(52) Cooperative Patent Classification (CPC):
**B32B 27/10; B32B 27/28; C08F 8/44; C08J 3/03;
C08L 23/08; C08L 33/00; C09D 7/61;
C09D 123/08; C09D 133/00**

(86) International application number:
**PCT/JP2021/026201**

(87) International publication number:
**WO 2022/014546 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2020   JP 2020120841
30.03.2021   JP 2021056440
30.03.2021   JP 2021056441**

(71) Applicant: **Sumitomo Seika Chemicals Co., Ltd.
Kako-gun, Hyogo 675-0145 (JP)**

(72) Inventors:
• **OKAMOTO, Masafumi
Himeji-shi, Hyogo 672-8076 (JP)**
• **FUJIWARA, Toshiaki
Himeji-shi, Hyogo 672-8076 (JP)**
• **MIZUHASHI, Toshinari
Himeji-shi, Hyogo 672-8076 (JP)**

(74) Representative: **Vossius & Partner
Patentanwälte Rechtsanwälte mbB
Siebertstraße 3
81675 München (DE)**

(54) **RESIN DISPERSION COMPOSITION**

(57)    This invention provides an aqueous dispersion composition comprising in a stably dispersed state a copolymer comprising an $\alpha,\beta$-unsaturated carboxylic acid or an ester thereof as a constituent unit, the composition being characterized by having a relatively high content of the copolymer and also having relatively low viscosity. The invention also provides a production method for the aqueous dispersion composition. The production method is for producing an aqueous dispersion composition of a copolymer comprising an $\alpha,\beta$-unsaturated carboxylic acid or an ester thereof as a constituent unit, the method comprising (1) mixing a copolymer comprising an $\alpha,\beta$-unsaturated carboxylic acid or an ester thereof as a constituent unit, a basic substance, and water such that the concentration of the copolymer is 40 to 62 mass%, and that the copolymer is neutralized to a degree of neutralization of 10 to 35%, (2) applying a pressure of 0.1 to 2 MPa to the obtained mixture, and (3) further adding water after the pressure application to adjust the concentration of the copolymer to 30 to 60 mass%.

EP 4 183 577 A1

**Description**

Technical Field

The present disclosure relates to a resin dispersion composition etc. The contents of all of the documents disclosed in the present specification are incorporated herein by reference.

Background Art

Specific resins (e.g., ethylene-$\alpha,\beta$-unsaturated carboxylic acid copolymers) can form films with excellent thermal adhesion and are thus used in a wide range of applications, such as coating agents, heat-sealing agents, delayed tack agents, in-mold labeling, part-coating agents, fiber-treating agents, and various binders.

The resins used for these various applications may be used as a solid, or as dissolved or dispersed in a solvent or water. In the former state, forming thin films, such as laminate coatings, is difficult, and due to the recent widespread global demand for reducing plastics as much as possible, the resins in the latter state have been currently used more often. Among those in the latter state, in particular, from the viewpoint of resource saving, safety, and environmental problems, aqueous products that do not require the use of solvents, in particular, those that are dispersed in water have been increasingly in demand.

Examples of known aqueous resin dispersions include an aqueous dispersion obtained by neutralizing an ethylene-acrylic acid copolymer resin with a basic substance (ammonia, an amine, or an alkali metal hydroxide) (see, for example, Patent Literature (PTL) 1, PTL 2, and PTL 3).

Citation List

Patent Literature

PTL 1: JPS50-135141A
PTL 2: JP6426751B
PTL 3: JP4364983B

Summary of Invention

Technical Problem

For example, a known method comprises dispersing a carboxyl group-containing resin (e.g., an ethylene-$\alpha,\beta$-unsaturated carboxylic acid copolymer) using a pressure-resistant homomixer or a pressure-resistant colloid mill at a temperature equal to or higher than the melting point on the high-temperature side while neutralizing the carboxyl groups with a basic substance.

When an alkali metal salt is used as the basic substance, ammonia is typically used in combination. Additionally, to maintain the stability of the resulting aqueous dispersion composition, the resin (copolymer) content in the aqueous dispersion is as low as, for example, about 20 mass% or more and less than 30 mass%. Further, when ammonia is used alone as the basic substance, the amount for use is greater than that when an amine or an alkali metal salt is used for neutralization, which tends to cause very high viscosity and poor stability of the resulting aqueous dispersion composition.

In view of the above, the present inventors conducted research to develop an aqueous dispersion composition comprising a carboxyl group-containing resin in a stably dispersed state, the composition being characterized by having a relatively high content of the copolymer and also having relatively low viscosity.

Solution to Problem

The inventors continued research by using ethylene-$\alpha,\beta$-unsaturated carboxylic acid copolymers as examples of the carboxyl group-containing resin. The inventors then found that aqueous dispersion compositions in which the carboxyl group-containing resin is dispersed usually tend to have high viscosity when the particle size of the resin is small. The inventors thus attempted to prepare the resin by adjusting the particle size to be larger so as to obtain an aqueous dispersion composition of the resin having relatively low viscosity.

In the attempt, the inventors found that the particle size of the resulting resin tends to increase when the amount of a neutralizer (basic substance) used in the preparation of the aqueous dispersion composition of the carboxyl group-containing resin is reduced. The inventors thus attempted to reduce as much as possible the amount of the neutralizer (basic substance) used in the preparation of the aqueous dispersion composition of the carboxyl group-containing resin, which revealed that reducing the amount of the neutralizer made the resulting resin difficult to stably disperse in an aqueous medium.

More specifically, it was clarified that the dispersion stability would be poor when the amount of the neutralizer for use was reduced to prepare the aqueous dispersion composition of the resin having a relatively large particle size so as to obtain a low-viscosity aqueous dispersion composition of the carboxyl group-containing resin.

To break out of this impasse, the inventors conducted further research and found the possibility of preparing an aqueous dispersion composition comprising the copolymer in a stably dispersed state, the composition being characterized by having a relatively high content of the copolymer and also having relatively low viscosity by increasing the internal pressure of a sealed, pressure-resistant container in which the carboxyl group-containing resin (in particular, a copolymer containing an $\alpha,\beta$-unsaturated carboxylic acid or an ester thereof as a constituent unit) is neutralized, and by appropriately adjusting the concentration of the copolymer in the copolymer-containing composition to be neutralized. Based on the findings, the inventors conducted further research.

The present disclosure encompasses, for example, the subject matter described in the following items.

Item 1.

An aqueous dispersion composition of a copolymer comprising an $\alpha,\beta$-unsaturated carboxylic acid or an ester thereof as a constituent unit,

the polymer being contained in an amount of 30 to 60 mass%, and
the composition having a viscosity at 25°C of 5000 mPa·s or less.

Item 2.

The composition according to Item 1,

wherein the $\alpha,\beta$-unsaturated carboxylic acid is at least one member selected from a group consisting of acrylic acid, methacrylic acid, crotonic acid, maleic acid, fumaric acid, and itaconic acid, and
the ester of $\alpha,\beta$-unsaturated carboxylic acid is a $C_1$-$C_{10}$ alkyl ester of $\alpha,\beta$-unsaturated carboxylic acid.

Item 3.

The composition according to Item 1 or 2, wherein the copolymer comprising the $\alpha,\beta$-unsaturated carboxylic acid or the ester thereof as a constituent unit further comprises at least one member selected from a group consisting of ethylene, propylene, butene, isobutene, butadiene, isoprene, and styrene as a constituent unit.

Item 4.

The composition according to any one of Items 1 to 3, wherein the copolymer comprising the $\alpha,\beta$-unsaturated carboxylic acid or the ester thereof as a constituent unit has a degree of neutralization of 10 to 35%.

Item 5.

The composition according to any one of Items 1 to 4, wherein the copolymer comprising the $\alpha,\beta$-unsaturated carboxylic acid or the ester thereof as a constituent unit has a median particle size of 1 to 10 $\mu$m.

Item 6.

The composition according to any one of Items 1 to 5, wherein the copolymer comprising the $\alpha,\beta$-unsaturated carboxylic acid or the ester thereof as a constituent unit is an ethylene-$\alpha,\beta$-unsaturated carboxylic acid copolymer.

Item 7.

The composition according to Item 6, wherein the ethylene-$\alpha,\beta$-unsaturated carboxylic acid copolymer is an ethylene-(meth)acrylic acid copolymer.

Item 8.

A laminate comprising a paper substrate and a film on the paper substrate, the film being formed from the composition of any one of Items 1 to 7.

Item 9.

A method for producing an aqueous dispersion composition of a copolymer comprising an α,β-unsaturated carboxylic acid or an ester thereof as a constituent unit, the method comprising

(1) mixing a copolymer comprising an α,β-unsaturated carboxylic acid or an ester thereof as a constituent unit, a basic substance, and water such that the concentration of the copolymer is 40 to 62 mass%, and that the copolymer is neutralized to a degree of neutralization of 10 to 35%, and
(2) applying a pressure of 0.1 to 2 MPa to the obtained

mixture.

Item 10.

A method for producing an aqueous dispersion composition of a copolymer comprising an α,β-unsaturated carboxylic acid or an ester thereof as a constituent unit, the method comprising

(1a) mixing a copolymer comprising an α,β-unsaturated carboxylic acid or an ester thereof as a constituent unit, ammonia, and water such that the concentration of the copolymer is 40 to 62 mass%, and that the amount of ammonia is 0.1 to 2 mol per mole of carboxyl groups in the copolymer, and
(2) applying a pressure of 0.1 to 2 MPa to the obtained mixture.

Item 11.

A method for producing an aqueous dispersion composition of an ethylene-(meth)acrylic acid copolymer, the method comprising

(1b) mixing an ethylene-(meth)acrylic acid copolymer, ammonia, and water such that the concentration of the copolymer is 40 to 62 mass%, and that the concentration of ammonia is 1 to 2 mass%, and
(2) applying a pressure of 0.1 to 2 MPa to the obtained mixture.

Item 12.

The method for producing an aqueous dispersion composition according to any one of Items 9 to 11, further comprising
(3) further adding water after the pressure application to adjust the concentration of the copolymer to 30 to 60 mass%.

Item 13.

The production method according to any one of Items 9 to 12, wherein the aqueous dispersion composition has a viscosity of 5000 mPa·s or less at 25°C.

Advantageous Effects of Invention

The present invention provides an aqueous dispersion composition comprising in a stably dispersed state a copolymer comprising an α,β-unsaturated carboxylic acid or an ester thereof as a constituent unit, the composition being characterized by having a relatively high content of the copolymer and also having relatively low viscosity. The invention also provides a method for producing the aqueous dispersion composition.
The aqueous dispersion composition is also characterized by having a relatively small amount of a neutralizer remaining in the aqueous dispersion composition since a relatively small amount of the neutralizer (basic substance) is used in the preparation. This aqueous dispersion composition can be used, for example, as a coating agent. A dry film formed from the aqueous dispersion composition has more improved water resistance when the aqueous dispersion composition has a lower content of a basic substance. Thus, when used as a coating agent, it is particularly preferred that the aqueous dispersion composition is used as a paper coating agent for the surfaces of wallpaper, and as a coating agent for packaging food.

Further, the aqueous dispersion composition has excellent film-forming properties since the concentration of the copolymer comprising an $\alpha,\beta$-unsaturated carboxylic acid or an ester thereof as a constituent unit contained in the composition is relatively high. Furthermore, depending on the material, such as paper, to which the aqueous dispersion composition is applied, impregnation of the particles of the copolymer can be reduced, thus achieving greater film thickness. This can reduce spots, holes, and other defects after coating.

Moreover, although handling of high-viscosity compositions is difficult, and workability is thus reduced, this is less likely to occur in terms of the aqueous dispersion composition since the composition has relatively low viscosity.

Description of Embodiments

Below, each embodiment encompassed by the present disclosure is described in more detail. The present disclosure preferably encompasses, for example, an aqueous dispersion composition of a copolymer comprising an $\alpha,\beta$-unsaturated carboxylic acid or an ester thereof as a constituent unit, and a production method for the composition; however, the present disclosure is not limited to these, and encompasses everything disclosed herein and recognizable to those skilled in the art. The copolymer comprising an $\alpha,\beta$-unsaturated carboxylic acid or an ester thereof as a constituent unit may be referred to as "the copolymer (A)."

The aqueous dispersion composition of the copolymer (A) encompassed by the present disclosure comprises 30 mass% or more (preferably 30 to 60 mass%) of the copolymer (A), and has a viscosity at 25°C of 5000 mPa·s or less (more preferably 4500, 4000, 3500, 3000, 2500, 2000, 1500, or 1000 mPa·s or less). The aqueous dispersion composition encompassed by the present disclosure may be referred to below as "the composition of the present disclosure."

The viscosity of the composition of the present disclosure is measured with a BH rotational viscometer. Specifically, the viscosity is determined by reading the viscosity value one minute after the rotor starts rotating at 25°C by setting the rotation speed of the spindle rotor to 60 rpm. The rotor is appropriately set according to the viscosity. As a guide, the rotor for use is as follows: rotor No. 3 for less than 2000 mPa·s, rotor No. 4 for 2000 mPa·s or more and less than 5000 mPa·s, rotor No. 5 for 5000 mPa·s or more and less than 15000 mPa·s, rotor No. 6 for 15000 mPa·s or more and less than 40000 mPa·s, and rotor No. 7 for 40000 mPa·s or more.

The copolymer (A) is a copolymer comprising one or more $\alpha,\beta$-unsaturated carboxylic acids as a constituent unit. For example, the copolymer (A) may be (i) a copolymer of one or two or more $\alpha,\beta$-unsaturated carboxylic acids or esters thereof with a monomer other than the one or two or more $\alpha,\beta$-unsaturated carboxylic acids or esters thereof, or ii) a copolymer of two or more $\alpha,\beta$-unsaturated carboxylic acids or esters thereof. The "two or more $\alpha,\beta$-unsaturated carboxylic acids or esters thereof" include the case of only two or more $\alpha,\beta$-unsaturated carboxylic acids, and the case of only two or more $\alpha,\beta$-unsaturated carboxylic acid esters, as well as the case of one or more $\alpha,\beta$-unsaturated carboxylic acids and one or more $\alpha,\beta$-unsaturated carboxylic acid esters.

Examples of $\alpha,\beta$-unsaturated carboxylic acids include acrylic acid, methacrylic acid, crotonic acid, maleic acid, fumaric acid, and itaconic acid. Among these, (meth)acrylic acid (i.e., methacrylic acid and/or acrylic acid) is more preferred. Further, examples of esters of $\alpha,\beta$-unsaturated carboxylic acids include alkyl esters having 1 to 10 (1, 2, 3, 4, 5, 6, 7, 8, 9, or 10) carbon atoms. The alkyl moiety of the alkyl esters may be linear or branched. More specific examples of esters of $\alpha,\beta$-unsaturated carboxylic acids include methyl esters, ethyl esters, butyl (in particular, n-butyl) esters, and 2-ethylhexyl esters. Examples of esters of $\alpha,\beta$-unsaturated carboxylic acids also include 2-methylaminoethyl esters and hydroxyethyl esters (in particular, 2-hydroxyethyl esters). Among these, more preferable examples of esters of $\alpha,\beta$-unsaturated carboxylic acids include methyl (meth)acrylate, ethyl (meth)acrylate, and butyl (meth)acrylate.

Examples of monomers other than $\alpha,\beta$-unsaturated carboxylic acids or esters thereof include ethylene, propylene, butene, isobutene, butadiene, isoprene, and styrene.

More specifically, the copolymer (A) is preferably, for example, a copolymer of ethylene and an $\alpha,\beta$-unsaturated carboxylic acid or an ester thereof, or a copolymer of styrene and an $\alpha,\beta$-unsaturated carboxylic acid or an ester thereof. Among these, an ethylene-$\alpha,\beta$-unsaturated carboxylic acid copolymer is more preferred. More specifically, for example, the copolymer (A) is more preferably an ethylene-(meth)acrylic acid copolymer, a styrene-(meth)acrylic acid ester copolymer, or a styrene-(meth)acrylic acid-(meth)acrylic acid ester copolymer. In particular, an ethylene-$\alpha,\beta$-unsaturated carboxylic acid copolymer is preferred.

The copolymer (A) can be prepared by known methods or methods obvious from known methods. The copolymer (A) may also be purchased commercial products. For example, a commercial product of an ethylene-$\alpha,\beta$-unsaturated carboxylic acid copolymer may be purchased for use. Examples of commercial products include Primacor 5980 and Primacor 5990 (produced by Dow Chemical Japan Ltd.), and Nucrel AN4221C, Nucrel N5130H, Nucrel N2060, Nucrel N2050H, and Nucrel N1560 (produced by Dow-Mitsui Polychemicals Co., Ltd.).

The ethylene-$\alpha,\beta$-unsaturated carboxylic acid copolymer is particularly preferably an ethylene-(meth)acrylic acid copolymer.

It is preferred, but not so limited, that the carboxyl groups (derived from the α,β-unsaturated carboxylic acid) contained in the copolymer (A) are appropriately neutralized.

When the carboxyl groups of the copolymer (A) are in a free state, the hydrophilicity is usually relatively low, and when the carboxyl groups are in a salt state, the hydrophilicity is usually relatively high. Thus, when neutralized with a base, the neutralized carboxyl groups in the copolymer will act as an emulsifier, making it relatively easy to produce an aqueous dispersion.

For example, ammonia, organic amines, and alkali metal hydroxides are suitably used as bases for the neutralization.

Examples of organic amines include methylamine, ethylamine, diethylamine, diethanolamine, and triethanolamine. Examples of alkali metal hydroxides include sodium hydroxide, potassium hydroxide, and lithium hydroxide. Further, ammonia can also be used in the form of, for example, ammonia gas or an aqueous ammonia solution. These bases can be used alone or in a combination of two or more. Of these, ammonia is particularly preferred.

In the copolymer (A) contained in the composition of the present disclosure, 10 to 35% of the carboxyl groups contained are preferably neutralized. That is, the degree of neutralization of the ethylene-α,β-unsaturated carboxylic acid copolymer is preferably 10 and 35%. The upper or lower limit of this range may be, for example, 11, 12, 13, 14, 15, 16, 17, 18, 19, 20, 21, 22, 23, 24, 25, 26, 27, 28, 29, 30, 31, 32, 33, or 34%. For example, the degree of neutralization may be 12 to 33%. The percentages here are mol% of the carboxyl group unit.

The copolymer (A) is preferably, but is not limited to, a copolymer having an α,β-unsaturated carboxylic acid content of, for example, 8 mass% or more, and more preferably 8 to 50 mass%. The upper or lower limit of this range may be, for example, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46 47, 48, or 49 mass%. For example, the content may be 9 to 49 mass%. The α,β-unsaturated carboxylic acid content here refers to the content of the unit derived from the α,β-unsaturated carboxylic acid.

In particular, when the copolymer (A) is an ethylene-α,β-unsaturated carboxylic acid copolymer, the content of the α,β-unsaturated carboxylic acid is preferably 8 to 24 mass% to achieve a good balance between non-polar properties derived from the ethylene unit and polar properties derived from the α,β-unsaturated carboxylic acid. The upper or lower limit of this range may be, for example, 9, 10, 11, 12, 13, 14, 15, 16, 17, 18, 19, 20, 21, 22, or 23 mass%. The range may be, for example, 18 to 23 mass%. When the content of the α,β-unsaturated carboxylic acid is 8 mass% or more, better dispersibility in an aqueous dispersion medium is obtained due to the non-polar properties derived from the ethylene unit, making it possible to efficiently obtain an excellent aqueous dispersion composition. Further, when the content of the α,β-unsaturated carboxylic acid is less than 24 mass%, a film (coating film) prepared by using the obtained aqueous dispersion composition as a coating agent will have further improved blocking resistance.

The copolymer (A) in the composition of the present disclosure preferably has a median particle size of 1 to 10 um. The upper or lower limit of this range may be, for example, 1.5, 2, 2.5, 3, 3.5, 4, 4.5, 5, 5.5, 6, 6.5, 7, 7.5, 8, 8.5, 9, or 9.5 μm. For example, the range may be 1.5 to 9.5 μm. When the median particle size is 1 μm or more, the aqueous dispersion composition can have a more preferable (not too high) viscosity. Further, when the median particle size is 10 μm or less, the aqueous dispersion composition can have further improved stability (i.e., the dispersed state of the copolymer (A) can be kept more stable).

The median particle size is a median diameter, which is measured by a laser diffraction particle size distribution method. That is, the median particle size of the aqueous dispersion composition of the copolymer (A) is a value obtained when the measurement is performed with a laser diffraction particle size analyzer. Examples of the analyzer include the SALD2300 produced by Shimadzu Corporation. More specifically, 20 ml of water and 0.1 g of an anionic surfactant (ammonium polyoxyethylene lauryl sulfate, sodium polyoxyalkylene alkyl ether sulfate, etc.) are mixed, 0.1 g of an aqueous dispersion composition of the copolymer (A) to be measured is added thereto, ultrasonic waves are applied to the resulting mixture for 3 minutes while stirring is performed, and the median particle size is determined with a laser diffraction particle size analyzer. For calculation, measured particles showing the same diffraction/scattering patterns as spheres with a diameter of X μm are considered as having a particle diameter of X μm, regardless of their shape.

The content of the copolymer (A) in the composition of the present disclosure is preferably, for example, 30 to 60 mass%. The upper or lower limit of this range may be, for example, 31, 32, 33, 34, 35, 36, 37, 38, 39, 40, 41, 42, 43, 44, 45, 46, 47, 48, 49, 50, 51, 52, 53, 54, 55, 56, 57, 58, or 59 mass%. For example, the range may be 35 to 55 mass%.

The copolymer (A) may be used alone or in a combination of two or more.

The aqueous medium of the composition of the present disclosure for use is preferably water, and may be various types of water, such as tap water, industrial water, ion-exchanged water, deionized water, and pure water. Particularly preferred is deionized water or pure water.

The composition of the present disclosure may comprise other components as long as the effects are not impaired. Examples include antifoaming agents, viscosity modifiers, pH modifiers, surfactants, and antifungal agents. Examples further include, if necessary, antioxidants, fatty acid amides, waxes, silicone oils, and like blocking property improvement agents, and alcohols.

The composition of the present disclosure is useful, for example, as a binder or a coating agent. For example, the composition of the present disclosure can be applied to and dried on a substrate to form a film. The substrate is preferably, for example, paper, and more preferably packaging paper for food and beverages. This film is capable of preventing food or beverages from coming in direct contact with the paper (packaging paper). The film has a little adverse effect on food and beverages, and is preferable.

The present disclosure also preferably encompasses, for example, a laminate comprising a paper substrate and a film on the paper substrate, the film being formed from the composition of the present disclosure.

The composition of the present disclosure can be prepared, for example, by mixing the copolymer (A), the basic substance, and water such that the copolymer is neutralized to a specific concentration and a specific degree of neutralization, followed by pressure application (and further heating, if necessary). After pressure application, water is preferably further added for dilution such that the copolymer has a specific concentration.

The copolymer (A), the basic substance, and water are mixed such that the concentration of the copolymer (A) is preferably 40 to 62 mass%. The upper or lower limit of this concentration range may be, for example, 41, 42, 43, 44, 45, 46, 47, 48, 49, 50, 51, 52, 53, 54, 55, 56, 57, 58, 59, 60, or 61 mass%. For example, the concentration range may be, for example, 40 to 55 mass% or 45 to 55 mass%.

Further, as described above, the degree of neutralization of the copolymer (A) contained in the composition of the present disclosure is preferably 10 to 35%; thus, the basic substance is preferably mixed here such that the copolymer (A) is neutralized to a degree of neutralization of 10 to 35%.

More specifically, for example, when an ethylene-(meth)acrylic acid copolymer is used as the copolymer (A), and when ammonia is used as the basic substance, the ethylene-(meth)acrylic acid copolymer and ammonia are preferably mixed with water such that the concentration of the ethylene-(meth)acrylic acid copolymer in the resulting mixture is 40 to 62 mass%, and that the degree of neutralization of the copolymer is 10 to 35%. The amount of ammonia is not limited as long as the above degree of neutralization is achieved. For example, the concentration of ammonia in the resulting mixture is preferably 1 to 2 mass%. The amount of ammonia used is preferably 0.1 to 2 mol, and more preferably 0.4 to 1 mol, per mole of the carboxyl groups contained in the ethylene-$\alpha,\beta$-unsaturated carboxylic acid copolymer. The mixing of ammonia is preferably performed by using aqueous ammonia.

The mixture obtained by mixing the copolymer (A), the basic substance, and water is subjected to pressure application. The pressure application to the mixture is preferably performed while the mixture is mixed (e.g., stirred). The pressure application is preferably, for example, about 0.1 to 2 MPa. The upper or lower limit of this range may be, for example, 0.2, 0.3, 0.4, 0.5, 0.6, 0.7, 0.8, 0.9, 1, 1.1, 1.2, 1.3, 1.4, 1.5, 1.6, 1.7, 1.8, or 1.9 MPa. For example, the range may be 0.2 to 1.5 MPa.

The pressure application may be performed by, for example, introducing an inert gas into a sealed, pressure-resistant vessel in which stirring can be performed while the mixture is placed in the vessel. Examples of inert gases include nitrogen gas. Examples of the vessel include pressure-resistant autoclaves equipped with a stirrer.

Heating is preferably performed, if necessary, during the pressure application. For example, heating is preferably performed to a temperature equal to or higher than the temperature at which the copolymer (A) softens in an aqueous medium. More specifically, for example, heating is preferably performed to about 90 to 150°C, and more preferably about 95 to 140°C. When the copolymer (A) is an ethylene-(meth)acrylic acid copolymer, it is particularly desirable to heat the copolymer to this temperature for aging.

After cooling, the pressure is returned to ordinary pressure, and water is preferably added to the resulting mixture, if necessary, such that the mixture contains 30 to 60 mass% of the copolymer (A). If heating was performed during the pressure application, it is preferred to first cool the temperature to 90°C or lower (e.g., 90 to 80°C), then release the pressure from the inside of the vessel to return the pressure to ordinary pressure, and if necessary, further add water. When water is added, the amount of water is preferably adjusted so that the mixture contains 30 to 60 mass% of the copolymer (A). Further, mixing (stirring) is preferably performed, as required.

By performing the above steps, an aqueous dispersion composition in which the copolymer (A) is stably dispersed is suitably obtained, the composition having a viscosity at 25°C of 5000 mPa·s or less (more preferably 4500, 4000, 3500, 3000, 2500, 2000, 1500, 1000 mPa·s or less).

In the production process, it is possible to use a surfactant, in particular, to help dispersion; however, according to the present disclosure, an aqueous dispersion composition containing the copolymer (A) in a stably dispersed state, the composition being characterized by having a relatively high content of the copolymer and also having relatively low viscosity, is provided even without the particular use of a surfactant.

In the present specification, the term "comprise" or "contain" includes the meanings of consisting essentially of and consisting of. Further, the present disclosure includes any combination of the constituent requirements described here.

In addition, the various characteristics (properties, structures, functions, etc.) described in each embodiment of the present disclosure described above may be combined in any way in specifying the subjects encompassed by the present disclosure. In other words, the present disclosure encompasses all the subjects comprising all combinations of the combinable characteristics described in the present specification.

Examples

The embodiments of the present disclosure are described with reference to examples in more detail below. However, the embodiments of the present disclosure are not limited to the following examples.

Measurement of Median Particle Size

The median particle size of a resin (a copolymer comprising an $\alpha,\beta$-unsaturated carboxylic acid or an ester thereof as a constituent unit) in an aqueous dispersion composition was determined as follows. Specifically, 20 ml of water and 0.1 g of an anionic surfactant (e.g., a synthetic detergent containing ammonium polyoxyethylene lauryl sulfate and sodium polyoxyalkylene alkyl ether sulfate) were mixed in a 100-ml beaker, 0.1 g of a sample (the aqueous dispersion composition) was added thereto, ultrasonic waves were applied to the resulting mixture for 3 minutes while stirring was performed with a spatula, and the median particle size was measured with a laser diffraction particle size analyzer (SALD2300 produced by Shimadzu Corporation).

Measurement of Viscosity

An aqueous dispersion composition was immersed in a constant-temperature water bath whose temperature was adjusted to be constant at 25°C, and the viscosity of the aqueous dispersion was measured at 25°C. The viscosity was measured using a Brookfield DV-II+ with rotor No. 3 at a specific rotation number. Table 1 below shows the rotation numbers in the Examples.

Table 1

| Example | Rotation number (rpm) |
|---|---|
| Ex.1 | 60 |
| Ex. 2 | 60 |
| Comp. Ex. 1 | 6 |
| Comp. Ex. 2 | 1 |
| Comp. Ex. 3 | - |
| Comp. Ex. 4 | 60 |
| Comp. Ex. 5 | 6 |

Measurement of Solids Content (mass%)

One gram of an aqueous dispersion composition was weighed and dried in a hot air dryer (DRE320DR, produced by Advantec) at 130°C for 3 hours to obtain a dry solid. The solids content (mass%) was calculated according to the following formula.

$$\text{Solids content (mass\%)} = \frac{\text{Dry solid (g)}}{\text{Aqueous dispersion composition (g)}} \times 100$$

Measurement of Residue (mass%)

The contents in the composition obtained after neutralization of the copolymer comprising an $\alpha,\beta$-unsaturated carboxylic acid or an ester thereof as a constituent unit were filtered through a polyethylene 80-mesh sieve. Thereafter, the weight of the filtration residue remaining on the 80-mesh sieve was confirmed. The residue (mass%) was calculated according to the following formula.

$$Residue\ (mass\%) = \frac{Filtration\ residue\ (g)}{Aqueous\ dispersion\ composition\ (g)} \times 100$$

In the examples below, ethylene-$\alpha,\beta$-unsaturated carboxylic acid copolymers were used as the copolymer comprising an $\alpha,\beta$-unsaturated carboxylic acid or an ester thereof as a constituent unit.

Example 1

200 g of an ethylene-$\alpha,\beta$-unsaturated carboxylic acid copolymer (EAA (ethylene-acrylic acid copolymer), trade name: Primacor 5980, acrylic acid content: 20%, LG Global), 8.4 g of 28% aqueous ammonia as a neutralizer, and 191.6 g of water were placed in a 1000-mL pressure-resistant vessel equipped with a stirrer, and the vessel was hermetically sealed. Subsequently, pressure was increased by introducing nitrogen gas to 0.5 MPa as shown by a pressure gauge equipped with the pressure-resistant vessel. The temperature was then increased to 130°C while the mixture was stirred at 200 rpm, and stirring was performed for 4 hours while the interior of the vessel was kept at 130°C. Subsequently, the temperature was lowered to 90°C while stirring was performed at 100 rpm, and the pressure remaining in the vessel was released to return the pressure to ordinary pressure. Then, after 100 g of water was added from the side tube of the vessel for dilution, the temperature was lowered to 50°C. The contents were filtered through a polyethylene 80-mesh sieve to obtain an aqueous dispersion. The obtained aqueous dispersion composition had a solids content of 39.8 mass%, a median particle size of 4 $\mu$m, and a viscosity of 50 mPa·s, and the residue was 1.0 mass% or less.

Example 2

200 g of an ethylene-$\alpha,\beta$-unsaturated carboxylic acid copolymer (EAA (ethylene-acrylic acid copolymer), trade name: Primacor 5980, acrylic acid content: 20%, LG Global), 8.8 g of 28% aqueous ammonia as a neutralizer, and 191.2 g of water were placed in a 1000-mL pressure-resistant vessel equipped with a stirrer, and the vessel was hermetically sealed. Subsequently, pressure was increased by introducing nitrogen gas to 0.5 MPa as shown by a pressure gauge equipped with the pressure-resistant vessel. The temperature was then increased to 130°C while the mixture was stirred at 200 rpm, and stirring was performed for 4 hours while the interior of the vessel was kept at 130°C. Subsequently, the temperature was lowered to 90°C while stirring was performed at 100 rpm, and the pressure remaining in the vessel was released to return the pressure to ordinary pressure. Then, after 50 g of water was added from the side tube of the vessel for dilution, the temperature was lowered to 50°C. The contents were filtered through a polyethylene 80-mesh sieve to obtain an aqueous dispersion. The obtained aqueous dispersion composition had a solids content of 44.9 mass%, a median particle size of 4 um, and a viscosity of 300 mPa·s, and the residue was 1.0 mass% or less.

Comparative Example 1

240 g of an ethylene-$\alpha,\beta$-unsaturated carboxylic acid copolymer (EAA (ethylene-acrylic acid copolymer), trade name: Primacor 5980, acrylic acid content: 20%, LG Global), 11.0 g of 28% aqueous ammonia as a neutralizer, and 129.0 g of water were placed in a 1000-mL pressure-resistant vessel equipped with a stirrer, and the vessel was hermetically sealed. Subsequently, pressure was increased by introducing nitrogen gas to 0.5 MPa as shown by a pressure gauge equipped with the pressure-resistant vessel. The temperature was then increased to 130°C while the mixture was stirred at 200 rpm, and stirring was performed for 4 hours while the interior of the vessel was kept at 130°C. Subsequently, the temperature was lowered to 90°C while stirring was performed at 100 rpm, and the pressure remaining in the vessel was released to return the pressure to ordinary pressure. Then, after 250 g of water was added from the side tube of the vessel for dilution, the temperature was lowered to 50°C. Although attempts were made, filtering the contents was difficult due to high viscosity; thus, an aqueous dispersion was obtained without filtration. The obtained aqueous dispersion composition had a median particle size of 0.1 $\mu$m and a viscosity of 16000 mPa·s.

Comparative Example 2

200 g of an ethylene-$\alpha,\beta$-unsaturated carboxylic acid copolymer (EAA (ethylene-acrylic acid copolymer), trade name: Primacor 5980, acrylic acid content: 20%, LG Global), 13.5 g of 28% aqueous ammonia as a neutralizer, and 186.5 g of water were placed in a 1000-mL pressure-resistant vessel equipped with a stirrer, and the vessel was hermetically sealed. Subsequently, pressure was increased by introducing nitrogen gas to 0.5 MPa as shown by a pressure gauge equipped with the pressure-resistant vessel. The temperature was then increased to 130°C while the mixture was stirred at 200 rpm, and stirring was performed for 4 hours while the interior of the vessel was kept at 130°C. Subsequently, the temperature was lowered to 90°C while stirring was performed at 100 rpm, and the pressure remaining in the vessel was released to return the pressure to ordinary pressure. Then, after 100 g of water was added from the side tube of the vessel for dilution, the temperature was lowered to 50°C. Although attempts were made, filtering the contents was difficult due to high viscosity; thus, an aqueous dispersion was obtained without filtration. The obtained aqueous dispersion composition had a median particle size of 0.2 um and a viscosity of 100000 mPa·s.

Comparative Example 3

200 g of an ethylene-α,β-unsaturated carboxylic acid copolymer (EAA (ethylene-acrylic acid copolymer), trade name: Primacor 5980, acrylic acid content: 20%, LG Global), 6.7 g of 28% aqueous ammonia as a neutralizer, and 193.3 g of water were placed in a 1000-mL pressure-resistant vessel equipped with a stirrer, and the vessel was hermetically sealed. Subsequently, pressure was increased by introducing nitrogen gas to 0.5 MPa as shown by a pressure gauge equipped with the pressure-resistant vessel. The temperature was then increased to 130°C while the mixture was stirred at 200 rpm, and stirring was performed for 4 hours while the interior of the vessel was kept at 130°C. Subsequently, the temperature was lowered to 90°C while stirring was performed at 100 rpm, and the pressure remaining in the vessel was released to return the pressure to ordinary pressure. Then, after 100 g of water was added from the side tube of the vessel for dilution, the temperature was lowered to 50°C. When the contents were observed, the resin remained unchanged and was not dispersed.

Comparative Example 4

200 g of an ethylene-α,β-unsaturated carboxylic acid copolymer (EAA (ethylene-acrylic acid copolymer), trade name: Primacor 5980, acrylic acid content: 20%, LG Global), 8.8 g of 28% aqueous ammonia as a neutralizer, and 191.2 g of water were placed in a 1000-mL pressure-resistant vessel equipped with a stirrer, and the vessel was hermetically sealed. The temperature was then increased to 130°C while the mixture was stirred at 200 rpm, and stirring was performed for 4 hours while the interior of the vessel was kept at 130°C. Subsequently, the temperature was lowered to 90°C while stirring was performed at 100 rpm, and the pressure remaining in the vessel was released to return the pressure to ordinary pressure. Then, after 100 g of water was added from the side tube of the vessel for dilution, the temperature was lowered to 50°C. The contents were filtered through a polyethylene 80-mesh sieve to obtain an aqueous dispersion. The obtained aqueous dispersion composition had a solids content of 40 mass%, a median particle size of 3 um, and a liquid viscosity of 135 mPa·s, and the residue was 20 mass% or less.

Comparative Example 5

160 g of an ethylene-α,β-unsaturated carboxylic acid copolymer (EAA (ethylene-acrylic acid copolymer), trade name: Primacor 5980, acrylic acid content: 20%, LG Global), 10.5 g of 28% aqueous ammonia as a neutralizer, and 229.5 g of water were placed in a 1000-mL pressure-resistant vessel equipped with a stirrer, and the vessel was hermetically sealed. Subsequently, pressure was increased by introducing nitrogen gas to 0.5 MPa as shown by a pressure gauge equipped with the pressure-resistant vessel. The temperature was then increased to 130°C while the mixture was stirred at 200 rpm, and stirring was performed for 4 hours while the interior of the vessel was kept at 130°C. Subsequently, the temperature was lowered to 90°C while stirring was performed at 100 rpm, and the pressure remaining in the vessel was released to return the pressure to ordinary pressure. Then, the temperature was lowered to 50°C. Although attempts were made, filtering the contents was difficult due to high viscosity; thus, an aqueous dispersion was obtained without filtration. The obtained aqueous dispersion composition had a median particle size of 9.5 μm and a liquid viscosity of 17,000 mPa·s.

Table 2 shows the results. In the table, "resin" represents an ethylene-α,β-unsaturated carboxylic acid copolymer (specifically, an ethylene-acrylic acid copolymer). The concentration (mass%) of the solids contents in these Examples can be considered to be the concentrations of the ethylene-α,β-unsaturated carboxylic acid copolymers in the aqueous dispersion compositions.

Table 2

| | Initial resin concentration (mass%) | Degree of neutralization of resin (%) | Ammonia concentration (mass%) | Resin concentration after dilution (mass%) | Solids content (mass%) | Pressure application | Median particle size (μm) | Viscosity of aqueous dispersion composition (mPa·s) | Residue (mass%) |
|---|---|---|---|---|---|---|---|---|---|
| Ex. 1 | 50 | 25 | 1.18 | 40 | 39.8 | Yes | 4.0 | 50 | 1.0 or less |
| Ex. 2 | 50 | 26 | 1.23 | 45 | 44.9 | Yes | 4.0 | 300 | 1.0 or less |
| Comp. Ex. 1 | 65 | 25 | 2.19 | 40 | - | Yes | 0.1 | 16000 | - |
| Comp. Ex 2 | 50 | 40 | 1.89 | 40 | - | Yes | 0.2 | 100000 or more | - |
| Comp. Ex.3 | 50 | 20 | 0.94 | 40 | - | Yes | Defect | Defect | - |
| Comp. Ex.4 | 50 | 25 | 1.23 | 40 | 32.0 | No | 3.0 | 135 | 20 |
| Comp. Ex.5 | 40 | 40 | 1.26 | 40 (no dilution) | - | Yes | 9.5 | 17000 | - |

**Claims**

1. An aqueous dispersion composition of a copolymer comprising an $\alpha,\beta$-unsaturated carboxylic acid or an ester thereof as a constituent unit,

   the polymer being contained in an amount of 30 to 60 mass%, and
   the composition having a viscosity at 25°C of 5000 mPa·s or less.

2. The composition according to claim 1,

   wherein the $\alpha,\beta$-unsaturated carboxylic acid is at least one member selected from a group consisting of acrylic acid, methacrylic acid, crotonic acid, maleic acid, fumaric acid, and itaconic acid, and
   the ester of $\alpha,\beta$-unsaturated carboxylic acid is a $C_1$-$C_{10}$ alkyl ester of $\alpha,\beta$-unsaturated carboxylic acid.

3. The composition according to claim 1 or 2,
   wherein the copolymer comprising the $\alpha,\beta$-unsaturated carboxylic acid or the ester thereof as a constituent unit further comprises at least one member selected from a group consisting of ethylene, propylene, butene, isobutene, butadiene, isoprene, and styrene as a constituent unit.

4. The composition according to any one of claims 1 to 3, wherein the copolymer comprising the $\alpha,\beta$-unsaturated carboxylic acid or the ester thereof as a constituent unit has a degree of neutralization of 10 to 35%.

5. The composition according to any one of claims 1 to 4, wherein the copolymer comprising the $\alpha,\beta$-unsaturated carboxylic acid or the ester thereof as a constituent unit has a median particle size of 1 to 10 $\mu$m.

6. The composition according to any one of claims 1 to 5, wherein the copolymer comprising the $\alpha,\beta$-unsaturated carboxylic acid or the ester thereof as a constituent unit is an ethylene-$\alpha,\beta$-unsaturated carboxylic acid copolymer.

7. The composition according to claim 6, wherein the ethylene-$\alpha,\beta$-unsaturated carboxylic acid copolymer is an ethylene-(meth)acrylic acid copolymer.

8. A laminate comprising a paper substrate and a film on the paper substrate, the film being formed from the composition of any one of claims 1 to 7.

9. A method for producing an aqueous dispersion composition of a copolymer comprising an $\alpha,\beta$-unsaturated carboxylic acid or an ester thereof as a constituent unit, the method comprising

   (1) mixing a copolymer comprising an $\alpha,\beta$-unsaturated carboxylic acid or an ester thereof as a constituent unit, a basic substance, and water such that the concentration of the copolymer is 40 to 62 mass%, and that the copolymer is neutralized to a degree of neutralization of 10 to 35%, and
   (2) applying a pressure of 0.1 to 2 MPa to the obtained mixture.

10. A method for producing an aqueous dispersion composition of a copolymer comprising an $\alpha,\beta$-unsaturated carboxylic acid or an ester thereof as a constituent unit, the method comprising

    (1a) mixing a copolymer comprising an $\alpha,\beta$-unsaturated carboxylic acid or an ester thereof as a constituent unit, ammonia, and water such that the concentration of the copolymer is 40 to 62 mass%, and that the amount of ammonia is 0.1 to 2 mol per mole of carboxyl groups in the copolymer, and
    (2) applying a pressure of 0.1 to 2 MPa to the obtained mixture.

11. A method for producing an aqueous dispersion composition of an ethylene-(meth)acrylic acid copolymer, the method comprising

    (1b) mixing an ethylene-(meth)acrylic acid copolymer, ammonia, and water such that the concentration of the copolymer is 40 to 62 mass%, and that the concentration of ammonia is 1 to 2 mass%, and
    (2) applying a pressure of 0.1 to 2 MPa to the obtained mixture.

12. The method for producing an aqueous dispersion composition according to any one of claims 9 to 11, further comprising
(3) further adding water after the pressure application to adjust the concentration of the copolymer to 30 to 60 mass%.

13. The production method according to any one of claims 9 to 12, wherein the aqueous dispersion composition has a viscosity of 5000 mPa·s or less at 25°C.

## INTERNATIONAL SEARCH REPORT

| | International application No. |
|---|---|
| | PCT/JP2021/026201 |

A. CLASSIFICATION OF SUBJECT MATTER
B32B 27/10(2006.01)i; B32B 27/28(2006.01)i; C08F 8/44(2006.01)i; C08J 3/03(2006.01)i; C08L 23/08(2006.01)i; C08L 33/00(2006.01)i; C09D 123/08(2006.01)i; C09D 133/00(2006.01)i; C09D 7/61(2018.01)i
FI:       C08L33/00; B32B27/10; B32B27/28 101; C08L23/08; C08F8/44; C09D133/00; C09D123/08; C08J3/03 CES; C08J3/03 CEY; C09D7/61

According to International Patent Classification (IPC) or to both national classification and IPC

B. FIELDS SEARCHED

Minimum documentation searched (classification system followed by classification symbols)
C08J3/03-3/07; C08L23/08; C08L33/02-33/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2019-70092 A (UNITIKA LTD.) 09 May 2019 (2019-05-09) claims, paragraphs [0010]-[0012], [0026], [0028], [0032], [0036]-[0043], examples 1-4, tables 1, 2 | 1-5, 8 |
| Y | claims, paragraphs [0010]-[0012], [0026], [0028], [0032], [0036]-[0043], examples 1-4, tables 1, 2 | 9-10, 12, 13 |
| A | | 6, 7, 11 |
| | | |
| X | JP 2010-43186 A (DU PONT-MITSUI POLYCHEMICALS CO., LTD.) 25 February 2010 (2010-02-25) claims, paragraph [0039], examples 1-4, tables 1, 2 | 1-8 |
| Y | claims, paragraph [0039], examples 1-4, tables 1, 2 | 9-13 |

☒  Further documents are listed in the continuation of Box C.        ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 September 2021 (10.09.2021) | 21 September 2021 (21.09.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

14

**INTERNATIONAL SEARCH REPORT**

| | International application No. |
|---|---|
| | PCT/JP2021/026201 |

C (Continuation).   DOCUMENTS CONSIDERED TO BE RELEVANT

| Category* | Citation of document, with indication, where appropriate, of the relevant passages | Relevant to claim No. |
|---|---|---|
| X | JP 61-55165 A (DAINIPPON INK AND CHEMICALS, INCORPORATED) 19 March 1986 (1986-03-19) claims, examples 1, 2 | 1-4 |
| Y | claims, examples 1, 2 | 9-10, 12, 13 |
| A | | 5-8, 11 |
| X | JP 2003-119328 A (UNITIKA LTD.) 23 April 2003 (2003-04-23) claims, paragraphs [0024], [0028], [0054], [0057], example 8, tables 1, 2 | 1-4, 8 |
| Y | claims, paragraphs [0024], [0028], [0054], [0057], | 9-10, 12, 13 |
| A | example 8, tables 1, 2 | 5-7, 11 |
| Y | JP 2009-13334 A (UNITIKA LTD.) 22 January 2009 (2009-01-22) claims, paragraphs [0052], [0059] | 9-13 |
| A | | 1-8 |
| Y | JP 2005-8813 A (UNITIKA LTD.) 13 January 2005 (2005-01-13) claims, paragraphs [0032], [0033], [0043] | 9-13 |
| A | | 1-8 |

Form PCT/ISA/210 (continuation of second sheet) (January 2015)

**INTERNATIONAL SEARCH REPORT**
Information on patent family members

| International application No. |
| --- |
| PCT/JP2021/026201 |

| Patent Documents referred in the Report | Publication Date | Patent Family | Publication Date |
| --- | --- | --- | --- |
| JP 2019-70092 A | 09 May 2019 | (Family: none) | |
| JP 2010-43186 A | 25 Feb. 2010 | (Family: none) | |
| JP 61-55165 A | 19 Mar. 1986 | (Family: none) | |
| JP 2003-119328 A | 23 Apr. 2003 | US 2003/0187128 A1 claims, paragraphs [0032], [0041], [0076], [0090]-[0155], example 8, tables 1, 2 WO 2002/055598 A1 EP 1361248 A1 CN 1464894 A KR 10-0828504 B1 AU 2002219609 B | |
| JP 2009-13334 A | 22 Jan. 2009 | (Family: none) | |
| JP 2005-8813 A | 13 Jan. 2005 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S50135141 A
- JP 6426751 B

- JP 4364983 B